Europäisches Patentamt

European Patent Office

Office européen des brevets

(11) Veröffentlichungsnummer: **0 211 185**
A1

## (12) EUROPÄISCHE PATENTANMELDUNG

(21) Anmeldenummer: 86107901.0

(22) Anmeldetag: 10.06.86

(51) Int. Cl.⁴: **B44C 1/14** , B29C 65/44

(30) Priorität: 25.07.85 DE 3526592

(43) Veröffentlichungstag der Anmeldung:
25.02.87 Patentblatt 87/09

(84) Benannte Vertragsstaaten:
AT DE FR GB IT

(71) Anmelder: GRUNDIG E.M.V.
Elektro-Mechanische Versuchsanstalt Max
Grundig holländ. Stiftung & Co. KG.
Kurgartenstrasse 37
D-8510 Fürth(DE)

(72) Erfinder: Zimmermann, Gerhard, Dipl.-Ing.
Beethovenstrasse 1
D-8502 Zirndorf(DE)

(54) Verfahren zur Herstellung eines Bedienknopfes mit Metalleffekt.

(57) Beschrieben wird ein Verfahren zur Herstellung eines Bedienknopfes (1) aus vorwiegend schwarz eingefärbtem Kunststoff mit wenigstens einer metallisch glänzenden Facette (4), die mittels eines Warmstempels (6) unter Verwendung einer Prägefolie (5) auf den Bedienknopf (1) aufgebracht ist.

## VERFAHREN ZUR HERSTELLUNG EINES BEDIENKNOPFES MIT METALLEFFEKT

Die Erfindung betrifft ein Verfahren zur Herstellung eines Bedienknopfes/Drehknopfes aus Kunststoff mit Metalleffektfacetten.

Es ist bekannt, daß Drehknöpfe z. B. aus Aluminium oder Kunststoff hergestellt werden. Weiterhin ist bekannt, daß der innere Teil eines Drehknopfes aus Kunststoff gefertigt ist, und über den sichtbaren äußeren Teil eine tiefgezogene Aluminiumkappe aufgedrückt ist. Durch einen derartigen Fertigungsvorgang kann ein weniger dekorativ aussehender Kunststoffdrehknopf aufgewertet werden und ist kostenmäßig bezüglich seines Fertigungsaufwandes nicht mit einem mechanisch durch vorwiegend spanabhebende Fertigungsverfahren herzustellenden Vollmetallknopf zu vergleichen. Eine häufig besonders gewünschte optische Drehknopfgestaltung besteht darin, daß der Drehknopf selbst mattschwarz ist, und nur durch Anbringen einer metallisch glänzenden Übergangsfacette zwischen dem zylindrischen Mantelteil und der kreisförmigen Planseite seine Metallwertigkeit demonstriert. Die auf den Kunststoffteilen des Drehknopfes aufgedrückte Aluminiumkappe wird hierzu zuerst farblich behandelt z. B. mattschwarz eloxiert und anschließend wird eine hochglänzende Facette auf einer Drehmaschine mittels eines Diamantwerkzeuges angedreht.

Aufgabe der Erfindung ist es daher, ein Verfahren zu finden, das es erlaubt, einen kostengünstigen Drehknopf aus Kunststoff derart zu behandeln, daß ohne eine aufwendige Metallkappe verwenden zu müssen, ein dekorativer Drehknopf mit einer metallisch hochglänzenden Facette entsteht, der bezüglich seiner optischen Gestaltung einem dekorativer aussehenden Metallknopf gleichzusetzen ist.

Diese Aufgabe wird erfindungsgemäß durch die im Kennzeichen des Patentanspruchs angegebenen Merkmale gelöst.

Die Erfindung wird nachfolgend anhand einer Zeichnung erläutert.

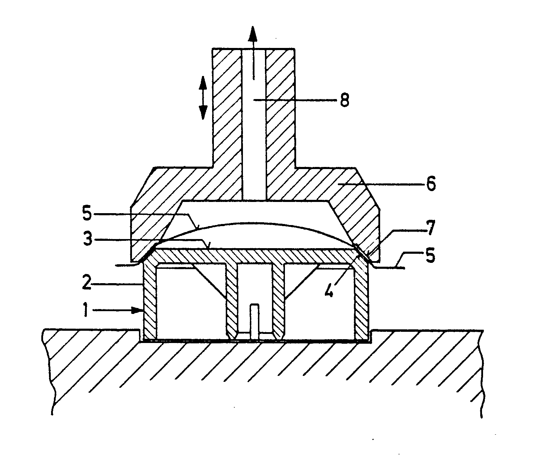

Die in der Zeichnung dargestellte Figur zeigt einen Drehknopf mit einem Prägestempel im Schnitt. Der Drehknopf 1, der aus eingefärbten, z. B. metallschwarzem Kunststoff gespritzt ist, weist am Übergang vom zylindrischen Teil 2 zur scheibenförmigen Planseite 3 eine Facette 4 auf. Über den in einer nicht näher dargestellten Druckpresse eingelegten Drehknopf ist eine heiß verklebbare Metallprägefolie 5 aufgelegt. Durch einen erwärmten rohrförmigen Andruckstempel wird die Prägefolie auf den Drehknopf aufgedrückt. Der Stempel 6 hat hierfür ringförmige Schrägflächen 7 und ist im übrigen Bereich ausgespart. Damit ein Anliegen der Prägefolie außerhalb der Facettenfläche des Drehknopfes vermieden wird, ist nach der dargestellten Zeichnung im Andruckstempel eine Bohrung 8 eingebracht, durch die Luft angesaugt werden kann, und sich die Folie in den Freiraum des Stempels hineinwölbt. Nach diesem Verfahren können Facetten beliebiger Gestaltung an Drehknöpfen mit einem Metalleffekt versehen werden. Es sind sowohl verschiedene Facettenstufen als auch Facetten an abgesetzten Drehknöpfen mit Metalleffekten zu versehen.

## Ansprüche

Verfahren zur Herstellung eines Bedienknopfes/Drehknopfes aus Kunststoff mit Metalleffektfacetten, **dadurch gekennzeichnet,** daß man

a) den Drehknopf (1) in bekannter Weise aus Kunststoff spritzt,

b) am Übergang vom zylindrischen Mantelteil (2) zur scheibenförmigen Planseite (3) eine Facette (4) anbringt,

c) auf die Planseite eine Metallprägefolie (5) auflegt und mit einem erwärmten Andruckstempel (6) auf den Drehknopf aufdrückt,

d) den Andruckstempel durch ringförmige Schrägflächen (7) derart ausbildet, daß die Folie nur an der Facettenfläche des Drehknopfes anliegt und die Folie im übrigen Bereich in den Freiraum des Stempels mittels Luft gedrückt oder gesaugt wird.

| | | Nummer der Anmeldung |
|---|---|---|
| Europäisches Patentamt | **EUROPÄISCHER RECHERCHENBERICHT** | EP 86107901.0 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP - A1 - 0 130 424 (BAYER)  <br> * Seite 6, Zeilen 14-16 *  <br> -- | 1 | B 44 C  1/14 <br> B 29 C 65/44 |
| A | DE - B2 - 2 755 848 (ALPS ELEC- TRIC) <br> * Fig. 2 * <br> -- | 1 | |
| A | EP - A1 - 0 097 302 (RENOWIZKY) <br> * Seite 6, Zeilen 20-25 * <br> -- | 1 | |
| A | CH - A - 401 723 (HOFFCO S.A.) <br> * Seite 3, Zeilen 91-98 * <br> -- | 1 | |
| A | DE - A1 - 2 753 303 (W.U.H. FERN- HOLZ) <br> * Patentanspruch 1; Seite 7, Absatz 2 * <br> ---- | 1 | **RECHERCHIERTE SACHGEBIETE (Int. Cl 4)** <br><br> B 21 D <br> B 23 P <br> B 29 C <br> B 29 D <br> B 44 C <br> B 67 B <br> H 01 H |

Der vorliegende Recherchenbericht wurde für alle Patentansprüche erstellt.

| Recherchenort <br> WIEN | Abschlußdatum der Recherche <br> 09-10-1986 | Prüfer <br> GLAUNACH |
|---|---|---|